# DEMANDE DE BREVET EUROPEEN

(11) **EP 1 775 152 A1**
(43) Date de publication de la demande: **18.04.2007**
(21) Numéro de dépôt: 06291600.2
(22) Date de dépôt: 13.10.2006
(51) Int. Cl.: B60J 7/14

(54) **Elément de toit rigide, toit et véhicule convertible correspondants**

(30) Priorité: 13.10.2005 FR 0510474
(71) Demandeur: Heuliez, 79142 Cerizay Cedex (FR)
(72) Inventeur: Deschatres, Bernard, 79300 Saint Sauveur Givre en Mai (FR); Collet, Jean-Yves, 85290 Mortagne sur Sevre (FR)
(74) Mandataire: Pichat, Thierry

(57) **Abrégé**

Est concerné un véhicule convertible dont les moyens d'actionnement du toit rigide (5) comprennent un actionneur (29) et une première et une seconde biellettes (67a, 67b) reliées chacune à la tige (69) de l'actionneur qui les commande et articulées, pour la première (67a), sur l'élément de toit (55b) concerné, et, pour la seconde (67b), sur un pivot (670) relié à la caisse (3,63,660) du véhicule, à l'endroit de l'axe (38a) du pivot d'articulation de cet élément rigide de toit (55b, 550b) par rapport à la caisse, ou à proximité de lui.

## Description

Un toit rétractable pour un véhicule transformable ou convertible est visé, de même que le véhicule en lui-même.

Il est connu d'équiper certains véhicules d'un toit rigide articulé. Le toit comprend typiquement au moins un élément rigide de toit pourvu d'un moyen pivot d'articulation par rapport à cette caisse. Sont aussi prévus des moyens d'actionnement pour cette articulation. Ces moyens peuvent comprendre un actionneur articulé à la caisse ou à un élément support à fixer/fixé à cette caisse et une tige mobile en translation, ainsi que des biellettes de transmission du mouvement.

Il s'agit ici de proposer en particulier une solution d'articulation de toit à biellettes pouvant offrir tout ou partie des avantages suivants : cinématique améliorée, gain de place, efficacité, fiabilité, stabilité et précision dans les mouvements, réduction de coûts, facilité/ergonomie de montage.

Il est ainsi proposé en particulier que l'élément de toit précité - pourvu dudit moyen pivot d'articulation par rapport à la caisse - présente, suivant une direction transversale à l'axe longitudinal du véhicule, un renfort transversal qui relie entre eux les pivots d'articulation dont est pourvu l'élément rigide de toit pour s'articuler par rapport à la caisse.

On doit comprendre qu'ici ladite biellette sera articulée sur la structure même de cet élément de toit, et donc pas sur un bras d'articulation, comme l'un des bras 61 cités plus loin.

Ainsi on constatera plus loin que la dite « première » biellette sera articulée sur une patte intégrée (patte 33a) ou éventuellement fixée rigidement (patte 33) à la structure même de l'élément de toit concerné.

Tant les éléments de toit arrière (55b, 550b), avant (55a) que latéraux (éléments de custode 65a, 65b) seront considérés comme « ayant une surface structurelle occupant une portion au moins substantielle de la largeur du toit », dans la mesure où cette surface sera notablement plus importante que celle d'un simple bras de commande , tel en particulier le bras 61 qui n'appartient au demeurant pas à la structure même de l'élément de toit concerné et ne présente donc pas sa surface structurelle.

En particulier si l'élément de toit est un élément arrière du toit qui comprend la lunette arrière et qu'un élément rigide avant de toit s'étend devant lui toit fermé au-dessus de l'habitacle, et si pour l'articulation du toit, un bras est adjoint, articulée à l'arrière sur la caisse et lié à l'avant à l'un au moins desdits éléments de toit, alors ladite première biellette sera articulée sur l'élément arrière de toit, à l'écart dudit bras, à la différence de ce qui est prévu dans FR-C-2728 199 (avec le bras 17).

Utiliser deux pattes situées de part et d'autre et à proximité dudit plan vertical médian pour porter le pivot d'articulation de l'élément rigide de toit favorisera l'équilibre et la précision des commandes.

On sait que nombre de toits connus sont réalisés en tôles formées auxquelles on fixe des bras de renfort portant des articulations ou des parties de pivot.

Ceci pose des difficultés de réalisation, d'assemblage, de possible déformations au moins locales, voire de volume, de poids, donc de coût, ou encore parfois de vibrations, lorsque le véhicule roule.

Pour apporter une solution à tout ou partie de ces problèmes, on propose en particulier que l'élément de toit rigide précité soit réalisé à partir d'une structure porteuse monobloc présentant une forme de cadre périphérique, son pivot d'articulation étant porté par cette structure monobloc, favorablement moulée, obtenue avantageusement par injection.

D'autres caractéristiques apparaitront encore dans les revendications, ce qui suit qui fournissant une description d'au moins un mode de réalisation cité comme exemple non limitatif, en liaison avec des dessins où:
la figure 1 est un schéma de véhicule, toit à deux éléments, fermé,
la figure 2 montre de côté, le véhicule de la fig.1, toit fermé et ouvert (traits fantômes),
la figure 3 est un schéma de véhicule, toit à quatre éléments, fermé au dessus de l'habitacle,
la figure 4 schématise le même toit, avec ses articulations,
les figures 5, 6 et 7 montrent une structure porteuse monobloc conforme à l'invention,
la figure 8 est la coupe VIII-VIII de la fig.5,
les figures 9, 10 et 11 schématisent en coupe dans le plan médian l'articulation de l'élément arrière de toit sur la caisse,
la figure 12 montre une solution où l'axe du pivot d'une biellette est coaxial à l'axe de pivotement de l'élément rigide de toit par rapport à la caisse,
et les figures 13 et 14 montrent une structure porteuse monobloc à cadre périphérique ouvert.

Sur les figures, les ronds portant une croix indiquent un pivot ou un axe d'articulation et les traits noirs renforcés les reliant des biellettes, bielles ou bras d'articulation.

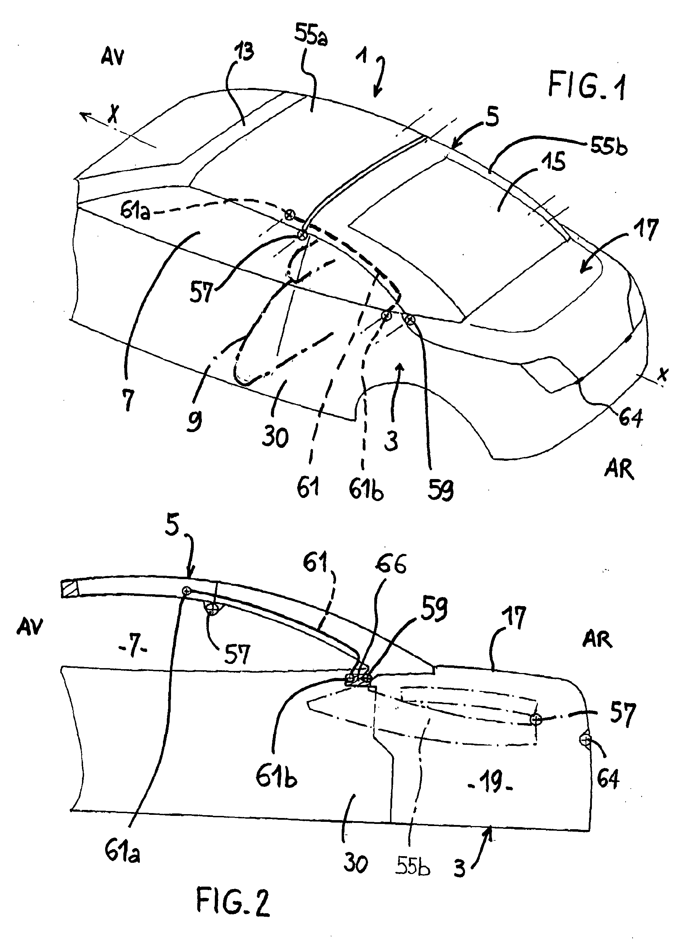

Figure 1, on voit un véhicule 1 comprenant une caisse, ou bâti structurel, 3 définissant ou relié à, en partie haute, un toit 5 qui, avec une zone environnante de la carrosserie 30 équipant cette caisse 3, définit l'habitacle intérieur 7.

Cet habitacle 7 accueille une ou plusieurs rangées de sièges, tels que les sièges 9 situés vers l'arrière de l'habitacle. L'avant du véhicule est marqué AV, l'arrière ARR.

Figure 1, l'habitacle 7 est recouvert par le toit 5 qui, fermé, s'étend longitudinalement (suivant l'axe longitudinal médian X du véhicule) entre la traverse supérieure 13 du pare-brise et, à l'arrière, la vitre arrière (ou lunette arrière) 15 dressée globalement transversalement à l'axe longitudinal X.

Le toit 5 est mobile entre une première position dans laquelle il recouvre au moins en partie l'habitacle 7 et une deuxième position dans laquelle cet habitacle est au moins en partie dégagé, le toit étant alors situé à l'écart du dessus de l'habitacle. Favorablement, il s'agira d'un toit articulé vis-à-vis de la caisse 3, même si un toit retirable (par complète séparation avec la caisse 3 et donc le véhicule) est envisageable, par exemple un « hard top ».

Par ailleurs, ce toit 5 est ici un toit rigide. Il s'agit en particulier d'un toit comprenant au moins deux éléments rigides 55a, 55b de recouvrement de l'habitacle, respectivement un élément avant 55a et un élément arrière 55b situé derrière l'élément avant, au moins dans ladite première position du toit au-dessus de l'habitacle 7, ces éléments avant et arrière étant ici articulés l'un par rapport à l'autre autour d'un premier pivot 57 s'étendant sensiblement perpendiculairement à l'axe longitudinal X du véhicule.

Concernant ce pivot, comme les autres articulations ci-après du toit, on doit comprendre que ce qui est indiqué concerne un côté du véhicule, l'autre étant de préférence pourvu de même, par symétrie par rapport à un plan médian vertical (30) passant par l'axe X.

Ceci précisé, l'élément arrière 55b du toit est en outre articulé par rapport à la caisse 3 autour d'un second pivot 59 s'étendant sensiblement perpendiculairement audit axe longitudinal X. Le passage du toit de sa première à sa seconde position inclut un pliage des éléments avant et arrière du toit l'un vers l'autre, ainsi que cette articulation de l'élément arrière de toit 55b autour du pivot 59 (voir toit plié dans l'espace 19, traits mixtes figure 2).

De chaque côté, un bras d'articulation 61 définissant un moyen d'actionnement, commande par ailleurs l'articulation de l'élément avant de toit 55a, par rapport à la caisse et à l'élément arrière de toit 55b.

En 61a et 61b figurent les pivots de rotation, respectivement avant et arrière, de l'élément de toit 55a, respectivement par rapport à l'élément arrière de toit 55b et à la caisse 3.

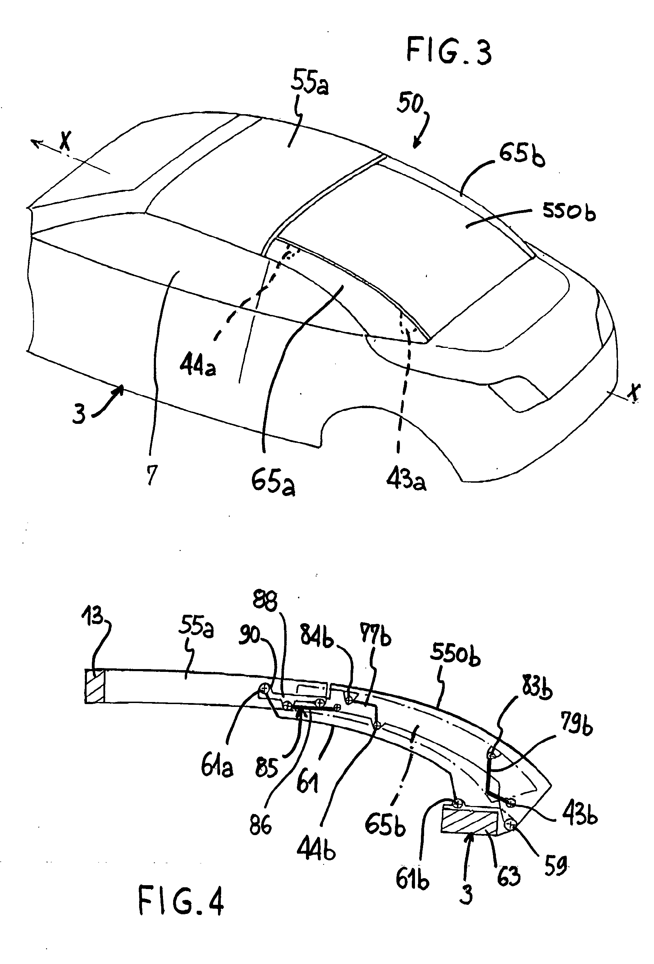

D'autres éléments de toit, tels que des custodes articulées et/ou une lunette articulée, pourraient aussi être prévue(s); de même que d'autres mécanismes de mouvement du toit (oscillo-coulissant, éléments coulissants sur des glissières...) ; voir figures 3 et 4 et description plus loin dans le texte.

L'espace arrière de rangement (ou de chargement) 19 est situé en contrebas du sommet de la vitre arrière 15 et, ici, du toit 5 alors fermé.

La limite arrière basse du toit 5 définit également, et sensiblement, la limite avant d'un capot mobile 17 adapté pour recouvrir ou libérer l'accès à une zone de rangement arrière 19 qui, ici, est un coffre arrière.

La zone de rangement 19 reçoit au moins le toit plié (figure 2, traits fantômes), voire des bagages ou autres charges.

Au-dessus de cette zone est articulé le capot 17, pour en ouvrir ou fermer l'accès. Ici, on a figuré en 64 l'un des pivots d'articulation arrière du capot par rapport à la caisse, pour qu'il s'ouvre en basculant de l'avant vers l'arrière du véhicule. Le capot peut être en plusieurs parties ayant des mouvements d'ouverture/fermeture différents.

Figure 1, l'élément avant de toit 55a se présente globalement comme une plaque cintrée s'étendant transversalement à l'axe X sur sensiblement toute la largeur du toit.

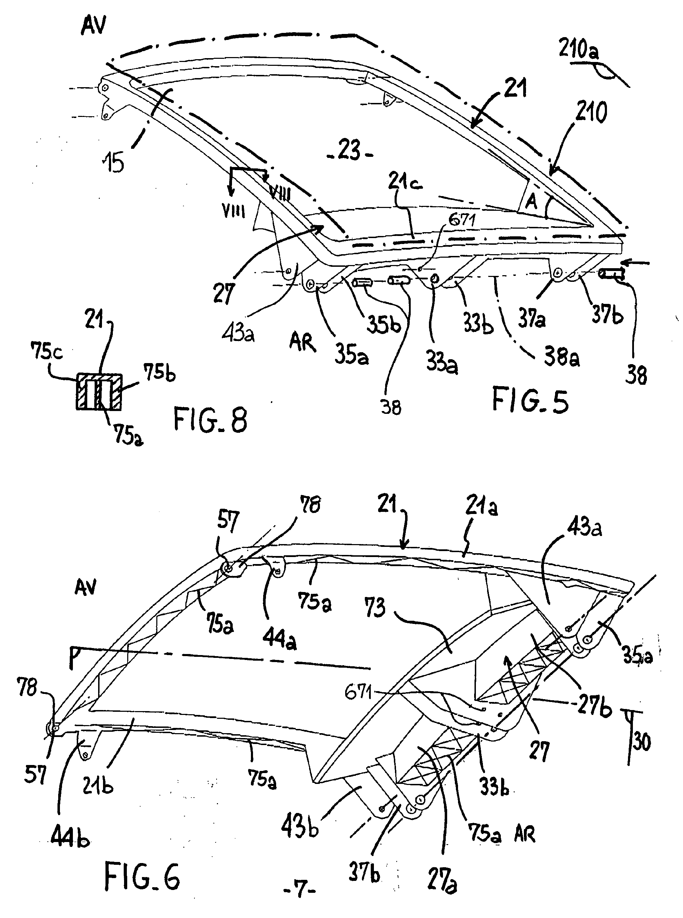

L'élément arrière de toit 55b, voire éventuellement l'élément avant de toit, est réalisé à partir d'une structure porteuse monobloc 210 présentant une forme de cadre périphérique 21 entourant périphériquement au moins une ouverture 23 et recevant, a priori par-dessus, au moins un élément de recouvrement (traits fantômes, figure 5) recouvrant une partie au moins de l'ouverture 23. Ici, cet élément de recouvrement est la vitre de lunette arrière 15.

La structure porteuse monobloc 210 est ici une structure moulée, de préférence obtenue par injection.

Avantageusement, il s'agira de moulage d'alliages légers, en particulier d'alliages légers métalliques à base de (c'est-à-dire contenant majoritairement du) magnésium, ou bien à base d'aluminium. Un alliage de magnésium avec une composition d'environ 95 % de magnésium et 5 % d'aluminium pourra être choisi. Un alliage à base d'aluminium (de l'ordre de 95 %) sera un peu plus lourd, mais plus résistant.

Il est également possible d'utiliser un moulage par injection de type BMC (Bulk Moulding Compound), c'est-à-dire un moulage par injection de fibres et de résine. Il peut s'agir de matériaux thermoplastiques ou thermodurcissables.

Comme ici, ces moulages BMC permettent d'obtenir, à partir donc d'un composite ou mélange de matériaux, des pièces de forme, en volume, et non pas simplement des plaques ou des feuilles.

On pourra également envisager des moulages à partir de nappes fibreuses, telles que fibres de verre ou fibres de carbone, noyées dans un liant, typiquement une résine.

Dans les cas d'utilisation de fibres (BMC, nappes fibreuses...) il sera intéressant d'orienter les fibres de sorte à favoriser la résistance de l'élément de toit concerné.

De préférence le cadre périphérique 21 présentera un périmètre fermé, comme figures 5 à 7.

Favorablement, ce cadre possède ici une partie 27 de renfort transversal appartenant à la structure monobloc.

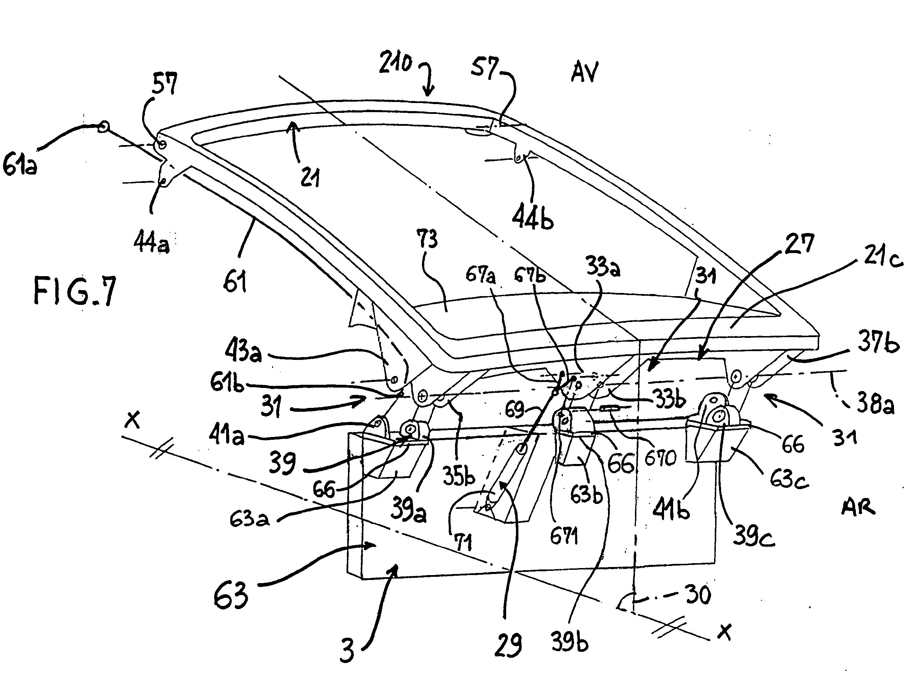

Sur la caisse du véhicule, comme figure 7, cette partie 27 constituera de préférence un renfort arrière structurant par une sorte de traverse cette zone transversale arrière proche des moyens de commande, ou d'actionnement, (tels l'actionneur 29) et/ou des pivots d'articulation sur la caisse 3 de l'élément arrière de toit 55b ici visé (moyens pivot repérés globalement en 31, figure 7).

Cette traverse, qui s'étendra globalement, une fois la pièce montée sur la caisse, transversalement à l'axe X, pourra donc recevoir, sur elle ou à proximité immédiate sur la structure 210, la poussée du ou des actionneurs de toit (29, notamment). Elle pourra donc aussi porter l'articulation arrière de ce toit.

En particulier figure 6, la traverse 27 apparaît comme comprenant, au sein de cet ensemble monobloc qu'est ladite structure porteuse, et spécifiquement ici au sein du cadre périphérique, deux parties de poutres 27a, 27b perpendiculaires à l'axe X et réunies, à proximité du plan médian 30, à deux pattes intégrées 33a, 33b et, latéralement, de chaque côté de l'élément 55b, à deux groupes d'autres pattes intégrées, respectivement 35a, 35b et 37a, 37b (voir également figs.5 et 6).

Ces multiples pattes, et même ici double pattes, portent un arbre 38 d'articulation, en une ou plusieurs parties, engagé à travers certaines au moins desdites pattes, lesquelles définissent ainsi des pattes de pivots d'articulation par rapport à la caisse 3 de l'élément de toit, ici plus précisément de la structure porteuse monobloc 210 de l'élément arrière de toit 55b, en engageant latéralement des paliers de caisse repérés ici globalement en 39.

Les paliers de caisse 39 comprennent ici trois paliers 39a, 39b, 39c recevant chacun l'arbre ou un tronçon d'arbre 38, suivant l'axe transversal 38a qui est perpendiculaire à X et situé vers/à l'arrière de la structure porteuse 210, sous elle.

Les paliers de caisse 39 sont donc portés par la caisse 3 et appartiennent ici à une structure support 63 de cette caisse figurée schématiquement comme un bloc structurant dressé transversalement à l'axe X, derrière les sièges 9 et vers le bord avant de l'espace de rangement 19.

Outre les paliers d'articulation de l'élément arrière de toit 55b, la structure support 63 de la caisse comprend, ou intègre, ici les paliers latéraux 41a,41b d'articulation arrière des bras latéraux 61 de commande en déplacement de l'élément avant de toit 55a par rapport non seulement à la caisse, mais également à cet élément arrière 55b.

Les paliers latéraux 41a, 41b sont situés à proximité immédiate - jouxtent - des paliers de caisse 39a,39c, de part et d'autre d'eux, extérieurement et un peu en avant (voir fig.7).

Ces paliers latéraux 41a, 41b reçoivent chacun l'engagement à travers eux du pivot arrière 61b du bras 61 correspondant dont les pivots avant 61a s'articulent à l'élément avant de toit 55a.

Avantageusement, les pivots de rotation ou d'articulation par rapport à la caisse, 39, 41a, 41b, seront, toit assemblé avec la caisse, portés ensemble par la structure support 63, laquelle pourra présenter des surfaces d'appui telles que 63a, 63b, 63c, recevant sur elles des platines, telles que 66 figs.2 et 7, intégrant lesdits paliers 39,41a,41b.

Ainsi, l'élément de toit concerné, pourvu de certains au moins de ses moyens pivot, pourra être aisément monté sur la caisse, par fixation des platines 66 auxdites surfaces d'appui de la caisse. La structure support 63 pourra être une poutre transversale ou une coque structurante appartenant d'origine à la caisse 3 ou rapportée sur elle avec le toit pré-monté (figure 7.)

Il doit être clair que d'autres solutions d'articulation et/ou d'autres éléments de toit pourraient être concernés par de telles pattes et/ou cette structure porteuse monobloc, tels par exemple les éléments de toit latéraux arrière 65a, 65b, que ce soit pour une articulation entre eux et la caisse 3, ou entre eux et au moins un autre élément de toit.

En alternative, ou comme ici en complément à cette fonction de moyens pivot, certaines au moins des pattes précitées, voire d'autres pattes monoblocs avec la structure 210, assureront avantageusement une fonction de fixation pour des moyens de commande en mouvement au moins de l'élément de toit portant ces pattes.

Ainsi, figure 7, au moins l'une des pattes centrales, ici 33a, appartenant à la structure monobloc définit une patte de fixation en ce qu'elle reçoit une liaison avec des moyens d'actionnement du toit liés à la caisse 3, tels l'actionneur de puissance 29.

Concernant cette patte 33a, on peut donc la considérer autant comme une patte de pivot d'articulation (voir ci-avant) que comme une patte de fixation.

On aura compris qu'on appelle donc ici « moyens d'actionnement du toit » en particulier tant les moyens actionneurs 29 que les bras de commande 61, dès lors qu'ils agissent, entre la caisse et au moins un dit élément de toit, pour commander l'articulation de cet élément soit par rapport à la caisse, soit par rapport à un autre élément de toit.

En particulier figure 6, on voit que la partie de renfort transversal 27 intègre avantageusement un élément 73 en forme sensiblement de plateau s'étendant entre les deux côtés ou bras latéraux 21a, 21b du cadre 21, ici entre les deux pattes 43a, 43b.

On notera que ces deux côtés latéraux 21a, 21b constituent ici l'équivalent des bras conventionnels précités de renfort portant des articulations du toit ou bien des parties de pivot d'articulation.

L'élément 73 définit une tablette adaptée pour occuper une partie au moins de l'espace s'étendant longitudinalement, toit fermé au-dessus de l'habitacle, entre le bord arrière du toit (côté transversal arrière 21c de la structure porteuse 210) et le dossier des sièges 9.

L'élément 73 est ici intégré à la structure porteuse 210 et donc fixe par rapport à l'élément arrière de toit 55b.

Cet élément 73 s'étend de biais (angle A, fig.5) par rapport à la surface générale (210a) globalement plane, ou légèrement cintrée comme par exemple sur les panneaux de toit traditionnels.

A cet élément 73 pourrait être articulé au moins un autre élément de tablette qui serait mobile par rapport à cet élément arrière de toit et donc par rapport au toit, pour être placé angulairement en fonction de la position du toit sur le véhicule.

En face inférieure, la tablette 73 se raccorde de façon donc monobloc avec la poutre 27 et les pattes précitées.

Le cadre périphérique de la structure 210 est renforcé par des nervures 75a qui s'étendent sur tout ou partie de son périmètre, et en particulier le long de la traverse arrière 27.

Avantageusement les nervures seront tournées vers l'intérieur du véhicule comme figure 6 où l'on a marqué en 7 la position de l'habitacle, sous la structure 210.

Cette orientation facilitera le démoulage de la structure.

La partie extérieure sera de préférence lisse, de manière à pouvoir recevoir au mieux des panneaux d'habillage avantageusement collés sur la surface lisse, tel que lé panneau extérieur vitré 15.

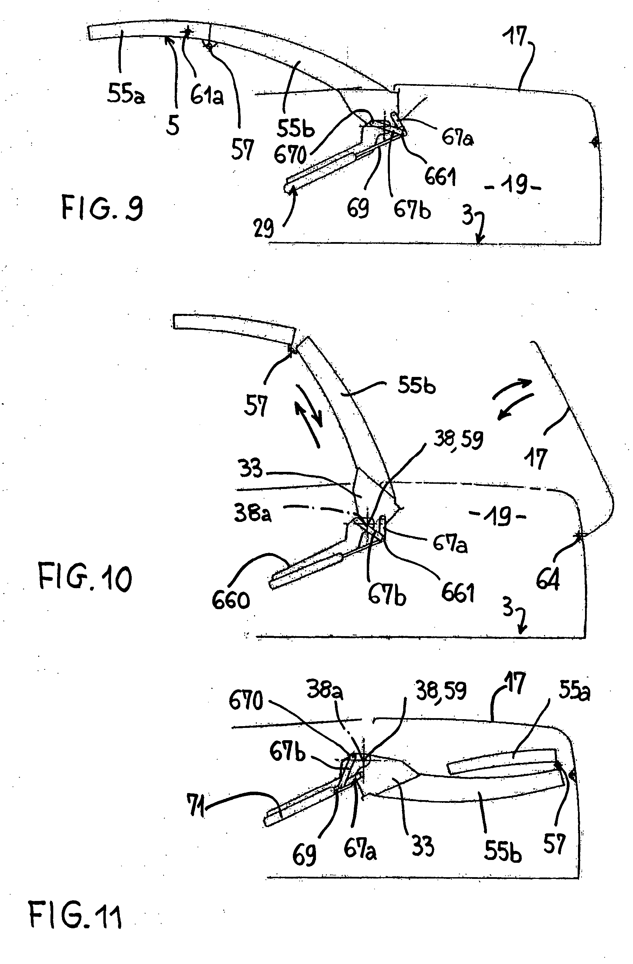

De préférence le cadre périphérique 21, y compris la partie de renfort transversal 27, présentera globalement une forme de poutre ayant des flancs 75b, 75c reliés par lesdites nervures 75a; fig.8.

Ces nervures et la tablette participeront au renfort mécanique de la structure 210.

Comme figures 3 et 4, le toit peut être différent et par exemple comprendre aussi des éléments latéraux de toit 65a, 65b. Ces éléments sont ici articulés respectivement à l'un et l'autre des côtés, ou bras, 21a, 21b de la structure 210.

Chacun de ces côtés de structure intègre une patte arrière 43a, 43b et une patte avant 44a, 44b pour cette liaison articulée entre les éléments de toit considérés. Ainsi, les pattes intégrées 43a, 43b, définissent des pattes de pivots d'articulation ou de fixation pour un élément de toit.

Les pattes 43a, 43b sont situées à l'écart des bords avant et arrière de la structure 210 (moyens pivot 31) ; voir fig.7.

Quant aux pivots 57, ils pourront être montés à l'endroit de pattes latérales avant 78 intégrées au cadre 21, comme fig.6.

La structure 210 ainsi conçue pourra servir au toit 5 des figures 1 et 2, ou à celui 50 des figures 3 et 4, avec son élément central arrière de toit 550b bordé par les éléments latéraux de toit 65a, 65b.

Figure 4, on retrouve un des bras 61 avec ses pivots 61a, 61b. En 59 se trouve l'articulation à la caisse de l'élément central de toit 550b (pivots 31 et paliers 39). L'un des éléments latéraux de toit 65b est montré lié à cet élément central de toit 550b par les biellettes 77b, 79b articulées en 43b, 44b sur ce dernier et en 83b, 84b sur le premier.

Un système 85 de liaison articulé relie l'élément central arrière de toit 550b à l'élément avant 55a, via une platine 88 intégré à un cadre, tel que 21, de structure moulée de cet élément avant. D'autres moyens d'actionnement, tels la biellette 86 pour les éléments latéraux 65a,65b, ou un moteur électrique avec si nécessaire des tiges,câbles... intermédiaires, pourraient être prévus pour le mouvement relatif entre les éléments de toit en cause et/ou pour un panneau de toit ouvrant. L'articulation 61a peut se faire à l'endroit d'une patte 90 intégrée à la platine 88.

Revenant figure 7, on note que les moyens d'actionnement du toit, et ici plus précisément de la structure porteuse monobloc 210 de l'élément arrière de toit 55b, comprennent l'actionneur 29, qui peut être un vérin à double effet.

Cet actionneur 29 comprend un corps d'actionneur 71 et une tige axiale mobile en translation, 69, laquelle commande deux biellettes 67a, 67b.

Le corps 71 de l'actionneur est fixé ou articulé sur la caisse ici la structure support 63, ou un élément rapporté sur elle.

L'actionneur commande, via lesdites biellettes 67a, 67b, l'articulation de l'élément arrière de toit 55b par rapport à la caisse.

Les biellettes 67a, 67b, ici au nombre de deux, sont reliées vers une première extrémité, et ensemble, à la tige 69 du vérin 29. Ici, elles sont ensemble articulées sur cette tige 69.

A sa seconde extrémité, la première biellette 67a est attachée sur l'élément de toit, ici articulée à proximité du pivot 38,59 (axe 38a), donc du renfort transversal.

Figure 7, la seconde biellette 67b est articulée sur un pivot 670 qui, à proximité du pivot d'articulation de l'élément de toit 55b, ou du moins de son axe 38a, est relié à la caisse ou, comme ici, à l'élément support 66 à fixer/fixé à cette caisse.

Pour le pivotement transversal recherché, l'arbre du pivot 670 s'engage à travers la seconde extrémité de la seconde biellette 67b, et à travers des passages communicants ménagés dans le palier 39b (repère 671) et au moins dans la patte 33a, de préférence dans les deux pattes 33a, 33b.

Figs.9, 10 et 11, on retrouve quasiment la solution de la fig.7. La première biellette 67a est attachée sur l'élément de toit 55b. Ici, elle est articulée à la patte 33, à proximité de l'axe 38a (marqué d'une croix) du pivot de toit 38, 59. La seconde biellette 67b est articulée sur le pivot 670 qui, à proximité des articulations précitées de la première biellette et du pivot 38, 59, est relié à un élément support 660 à fixer/fixé à la caisse 3.

A leur autre extrémité, ces deux biellettes sont en commun articulées en 661 à la tige 69 du vérin 29.

Les trois figures montrent l'évolution des articulations, successivement en position fermée du toit, intermédiaire et ouverte, toit alors escamoté dans le coffre 19, après basculement vers l'arrière du capot 17 autour de son pivot arrière 64.

L'élément de toit arrière 55b est alors sensiblement à plat, à l'envers, sa concavité vers le haut, avec l'élément de toit avant 55a replié par dessus lui.

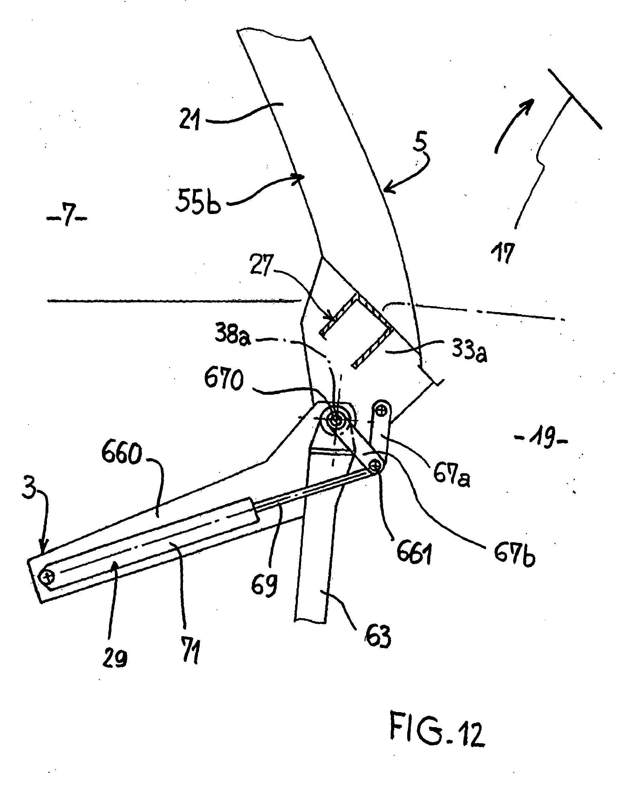

Figure 12, l'élément de toit 55b est considéré dans son état intermédiaire, entre fermé et ouvert.

L'axe du pivot 670 (déjà présenté figs.7 et 9 à 11) est ici coaxial à l'axe 38a de pivotement de l'élément rigide de toit (55b ici). Les deux pivots 38,670 sont même confondus, donc communs. Seul le pivot 670 apparaît donc et demeure.

Le pivot 670 sert alors à la fois pour l'articulation de la biellette 67b et pour le pivotement du toit par rapport à la caisse (élément 55b), en liaison avec les moyens pivot latéraux pourvus des deux tronçons d'arbre 38 précités.

Le cadre 21, peut être toujours prévu, comme sur les figs.9 à 11.

La tige 69 est sortie à moitié.

L'inclinaison du vérin 29 pourrait être différente de celle illustrée.

Figs.7, l'actionneur de puissance 29 est central, monté à l'endroit ou à proximité du plan médian 30. On doit comprendre qu'il en est favorablement de même figs.9 à 12.

Favorablement, les deux biellettes 67a, 67b seront articulées sur la caisse ou ledit élément support, à proximité l'une de l'autre.

Fig.7, suivant l'axe longitudinal (X), la seconde extrémité articulée 61b du bras 61 est située à proximité (légèrement en avant) de l'axe 38a et donc de l'attache de la première biellette 67a sur l'élément de toit arrière.

Parmi les avantages de la solution ci-avant, on peut noter :
- l'utilisation d'une pièce monobloc qui permet de réduire les sections périphériques du cadre (21) en intégrant dans la structure (210) les pièces de renfort (bras support 21a, 21b, traverse arrière 27, support de pivots 33a...35a...37b),
- la possibilité de diminuer l'encombrement de la structure, donc les volumes de garnissage,
- la réduction du poids de la structure, tout en conservant, voir en améliorant, la rigidité, notamment grâce au nervurage et à la répartition ciblée de la matière,
- la réduction de la déformation du toit au vent et lors des mouvements de fermeture/ouverture du toit, avec alors la transmission des efforts par la structure porteuse,
- le matériau moulé qui permet de réduire les vibrations du toit,
- la technique privilégiée de l'injection qui doit permettre d'intégrer plusieurs fonctions et pièces, de réduire des tolérances de fabrication et d'améliorer la précision des jeux et donc le fonctionnement du toit ; On pourra au besoin prévoir un usinage de ces parties de façon à augmenter encore la précision de réalisation.

D'autres éléments de toit qu'un élément arrière de toit pourraient être concernés par une partie au moins de ce qui a été décrit ci-avant pour cet élément.

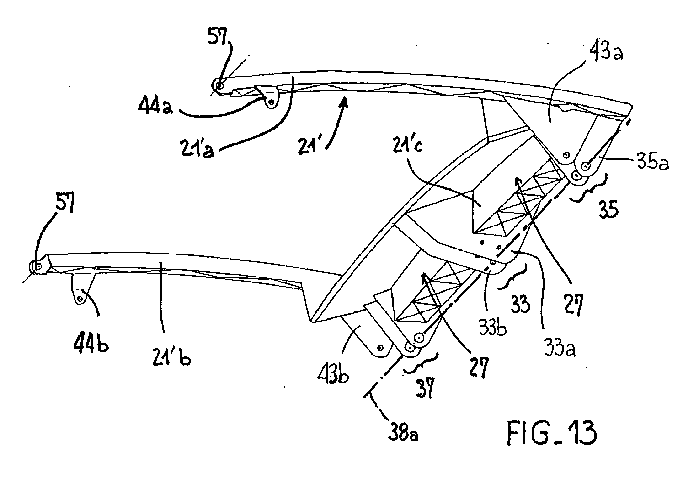

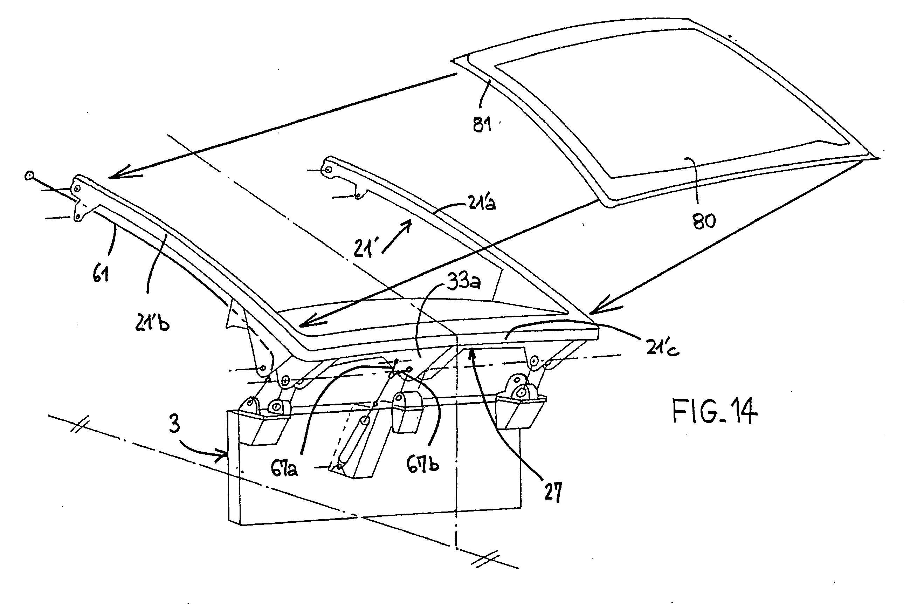

Figs. 13 et 14, on a illustré une alternative où le cadre périphérique précité, ici repéré 21', est ouvert. Il est ici dépourvu de traverse avant. Il présente une forme en U comprenant une traverse renforcée arrière 21'c d'où partent vers l'avant, en position fermée du toit comme sur les deux figures, deux bras latéraux 21'a, 21'b portant toujours chacun, à l'avant, les pattes 44a, 44b pour l'articulation avec un élément de toit avant, ainsi que les pivots 57.

Pour le reste du cadre 21', tout reste identique à ce qui a été décrit précédemment, y compris sa liaison articulée à la caisse 3. On retrouve ainsi les biellettes 67a, 67b et le bras de commande 61, ainsi que le renfort transversal en forme de poutre nervurée 27 reliant entre eux, globalement suivant l'axe transversal 38a, les différents moyens pivot du toit, ici repérés globalement 33, 35, 37 fig.13, pour son articulation par rapport à la caisse. La présence préférée des pattes (33a,33b,35a,... 43a,43b) a également été rappelée.

Fig. 14, un panneau 80 est rapporté sur le cadre 21'. Il peut s'agir d'un élément de lunette arrière. On peut prévoir de fixer directement une vitre sur la structure 21'. On pourra préférer fixer une telle vitre sur un cadre intermédiaire 81 qui servira d'interface de fixation au cadre 21', par exemple par vissage. Favorablement, le cadre intermédiaire 81 sera fermé sur lui-même.

## Revendications

1. Véhicule convertible présentant un axe longitudinal (X), un plan vertical médian (30) passant par cet axe, un avant et un arrière, ledit véhicule comprenant :
- une caisse (3),
- un habitacle (7),
- un toit rigide (5,50) articulé par rapport à la caisse, ce toit comprenant au moins un élément rigide de toit (55b,550b) pourvu, pour son articulation par rapport à la caisse, de plusieurs moyens pivot (33a,33b,35a, 35b,37a,37b,38) échelonnés le long d'un axe de pivotement (38a) transversal à l'axe longitudinal (X),
- des moyens d'actionnement (29, 61...) pour le déplacement articulé du toit par rapport à la caisse,
**caractérisé en ce que** cet élément de toit (55b,550b) présente, suivant une direction transversale à l'axe longitudinal (X), un renfort transversal (27,27a,27b,73) qui relie entre eux lesdits moyens pivot de l'élément rigide de toit (55b,550b).

2. Véhicule selon la revendication 1, **caractérisé en ce que** lesdits moyens d'actionnement (29, 61...) comprennent une première biellette (67a) articulée sur l'élément de toit et placée sous la commande d'un actionneur de puissance (29).

3. Véhicule selon la revendication 2, **caractérisé en ce que** :
- l'actionneur de puissance (29) est attaché (via 71) à la caisse ou à un élément support (63) à fixer/fixé à cette caisse et comprend une tige (69) mobile en translation,
- et une seconde biellette (67b) est reliée, avec la première, à cette tige mobile et est articulée sur un pivot (38, 670,63) dont est pourvue la caisse (3) ou le/un élément support (63a,63b,63c,66,660) à fixer/fixé à cette caisse, à l'endroit dudit axe de pivotement (38a), ou à proximité de lui.

4. Véhicule selon la revendication 3, **caractérisé en ce que** l'axe de pivotement de la seconde biellette (67b) sur l'élément rigide de toit concerné (55b, 550b) est coaxial à celui (38a) de cet élément de toit par rapport à la caisse.

5. Véhicule selon l'une des revendications 3 ou 4, **caractérisé en ce que** les pivotements de la seconde biellette (67b) et dudit élément rigide de toit concerné (55b, 550b) s'opèrent par des arbres (38, 670) communs, confondus.

6. Véhicule selon la revendication 2 ou l'une des revendications 3 à 5 en combinaison avec cette revendication 2, **caractérisé en ce que** :
- l'actionneur de puissance (29) est monté à l'endroit ou à proximité dudit plan médian (30),
- l'un desdits moyens pivot (38a, 38, 59, 39b, 33a, 33b) pour l'articulation de l'élément rigide de toit concerné (55b, 550b) par rapport à la caisse est central et situé à l'endroit ou à proximité du plan médian (30).

7. Véhicule selon la revendication 2 ou l'une des revendications 3 à 6 en combinaison avec cette revendication 2, **caractérisé en ce que** :
- l'élément de toit est un élément rigide de toit arrière (55b, 550b) comprenant une lunette arrière (15),
- le toit comprend en outre un élément rigide avant de toit (55a) situé devant l'élément de toit arrière, lorsque le toit est fermé au-dessus de l'habitacle (7),
- le véhicule comprend en outre au moins un bras (61) articulée à l'arrière sur la caisse ou sur ledit élément support (63, 66, 660) à fixer/fixé à cette caisse et lié, à l'avant et de façon articulée, à l'un au moins desdits éléments de toit,
- et la première biellette (67a) est articulée sur l'élément arrière de toit, à l'écart dudit bras (61).

8. Véhicule selon la revendication 2 ou l'une des revendications 3 à 7 en combinaison avec cette revendication 2, **caractérisé en ce que** la première biellette (67a) est articulée sur cet élément de toit à proximité dudit renfort transversal (27, 73).

9. Véhicule selon l'une quelconque des revendications précédentes, **caractérisé en ce que** ledit élément de toit rigide est réalisé comme une structure porteuse monobloc (210) présentant une forme de cadre périphérique (21,21'), lesdits moyens pivot d'articulation de cet élément de toit par rapport à la caisse étant portés par cette structure monobloc.

10. Véhicule selon la revendication 9, **caractérisé en ce que** le cadre périphérique (21') est ouvert, tel un cadre en U, et reçoit un panneau (80), tel une vitre, directement fixé à lui ou avec interposition d'un cadre intermédiaire (81).

11. Véhicule selon la revendication 9 ou 10,
**caractérisé en ce que** la structure porteuse monobloc (210) est une structure moulée.

12. Véhicule selon la revendication 2 et l'une des revendications 9 à 11, **caractérisé en ce que**:
- le cadre (21,21') de la structure monobloc s'étend suivant une surface générale (210a) et intègre plusieurs pattes (33a,33b,35a...) où sont définis lesdits moyens pivot (38a, 38) de l'élément de toit et qui se dressent transversalement à cette surface,
- et la première biellette (67a) est articulée sur l'une de ces pattes de pivot (33a).

13. Véhicule selon la revendication 12,
**caractérisé en ce que**:
- le cadre périphérique (21,21') comprend, en tant que renfort transversal, une poutre (27) appartenant à la structure monobloc et située vers l'arrière de cette structure,
- et ladite patte (33a) où est articulée la première biellette (67a) jouxte ce renfort transversal (27).

14. Véhicule selon l'une des revendications 9 à 13,
**caractérisé en ce que** le toit comprend en outre des éléments de toit latéraux (65a, 65b) situés de part et d'autre dudit au moins un élément rigide de toit (55b,550b) et articulés latéralement (en 43a,44a,43b,44b) au cadre périphérique (21,21',210).

15. Véhicule selon l'une des revendications 9 à 14,
**caractérisé en ce que** ledit au moins un élément rigide de toit (55b,550b) étant un élément de toit arrière derrière lequel est situé l'/un élément rigide avant de toit (55a), lorsque le toit est fermé au-dessus de l'habitacle (7), ces éléments de toit avant et arrière articulés l'un par rapport à l'autre autour d'un pivot (57) porté par le cadre périphérique (21,21',210).
